# EUROPEAN PATENT SPECIFICATION

(11) **EP 3 489 318 B1**
(45) Date of publication and mention of the grant of the patent: **22.02.2023**
(21) Application number: 18208679.3
(22) Date of filing: 27.11.2018
(51) Int. Cl.: C09J 7/38, C09J 7/35, C09J 7/10

(54) **SEALING TAPE AND METHODS OF MAKING THE SAME**
DICHTUNGSBAND UND VERFAHREN ZUR HERSTELLUNG DAVON
BANDE D'ÉTANCHÉITÉ ET SON PROCÉDÉ DE FABRICATION

(30) Priority: 28.11.2017 US 201715823710
(43) Date of publication of application: 29.05.2019
(73) Proprietor: tesa SE, 22848 Norderstedt (DE)
(72) Inventor: GEELINK, Martin, 22453 Hamburg (DE); ELLRINGMANN, Ute, 22589 Hamburg (DE); OLIVER, Robert, Lowell, 49331 (US)
(74) Representative: tesa SE

(56) References cited:
- WO-A1-96/25469
- US-A- 5 876 855
- US-A1- 2004 219 356
- US-A1- 2015 159 053
- US-A1- 2017 260 424

## Description

### FIELD OF THE DISCLOSURE

This disclosure lies in the technical field of adhesive tapes, as they are used for temporary or permanent bonding or covering of a plurality of substrates, e.g. construction components. More specifically, the disclosure pertains to a sealing tape which comprises a hotmelt adhesive side and a pressure-sensitive adhesive side. Furthermore, the disclosure is related to a method of manufacturing such sealing tape.

### BACKGROUND

Adhesive tapes normally are equipped on one or both sides with adhesive mass. Their use allows for simple, fast and in many cases high-performance bonding on a plurality of substrates. Often, very different substrates are to be bonded. In this case, it may be advantageous to have a double-sided adhesive tape with adhesive layers having different properties.

For example, poly(meth)acrylate based pressure-sensitive adhesives are known which provide for high bonding power on many substrates and furthermore exhibit long-term stability of the adhesive bond under various outdoor conditions.

On the other hand, heat-activatable adhesives have attracted more attention over the recent years. Frequently, these adhesives are polyolefins which provide for high-performance bonding on thermoplastic and thermosetting substrates. In case of thermoplastic substrates, the adhesive as well as the substrate may be in a molten or a softened state which enables interpenetration of the materials. After cooling, this leads to highly stable bonding, the substrate is quasi "sealed". Therefore, such heat-activatable adhesives are sometimes referred to as "sealing masses" or "sealing layers". In the case of thermosetting substrates, the softened heat-activatable adhesive may wet the substrate very well, which after cooling leads to good bonding strength.

There are examples in the field of double-sided adhesive tapes having different adhesives. For example, one such double-sided adhesive tape includes an adhesive tape comprising a layer containing a heat-activatable polyolefin adhesive having graft-polymerized, specific acrylic monomers thereon. Furthermore, the adhesive tape comprises a UV-polymerized acrylic pressure-sensitive adhesive layer which remains firmly bonded to the heat-activatable adhesive when the tape is heated. As another example, the double-sided adhesive tape includes an adhesive tape which comprises a heat-activatable adhesive layer based on a polymer made from one or more olefin monomers and a pressure-sensitive adhesive layer based on a polyacrylate pressure-sensitive adhesive. The pressure-sensitive adhesive layer is directly and permanently bonded to the heat-activatable layer.

Heat-sealable tapes of the kind set forth above are frequently used to bond a pressure-sensitive adhesive to demanding surfaces like EPDM. This type of material is widely used in the field, e.g., in the automotive field in weather seal fixation.

In view of the ongoing demand for adhesive tapes based on hotmelt- and pressure-sensitive adhesives (sealing tapes), further improvement of the tapes and of the methods for manufacturing such tapes is of great interest. Thus, it is an object of the present disclosure to provide sealing tapes having improved adhesive strength between the heat-activatable layer and the pressure-sensitive adhesive layer. Another object of these tapes is to provide improved shear resistance and peel strength.

### SUMMARY OF THE DISCLOSURE

According to a first aspect, a heat-sealable adhesive tape is provided which comprises: a hot-melt adhesive layer; and a pressure-sensitive adhesive layer adjacent to the hotmelt adhesive layer, the pressure-sensitive adhesive layer comprising a blend of b1) at least one poly(meth)acrylate, and b2) at least one selected from an elastomeric material and a thermoplastic elastomeric material. Further, a surface of the hot-melt adhesive adjacent to the pressure-sensitive layer is characterized by a CO₂-corona pre-treatment.

According to a second aspect, the adhesive tape of the first aspect is provided, wherein the hot-melt adhesive layer is a polyolefin layer.

According to a third aspect, the adhesive tape of the first aspect is provided,
wherein the pressure-sensitive adhesive layer is foamed.

According to an fourth aspect, the adhesive tape of the first aspect is provided,
wherein the pressure-sensitive adhesive layer comprises at least one tackifier compatible with the at least one poly(meth)acrylate.

According to a fifth aspect, a method of making a heat-sealable adhesive tape is provided that includes: providing a hot-melt adhesive layer; treating a surface of the hot-melt adhesive layer with a CO₂-corona to define a treated surface; and contacting the treated surface of the hot-melt adhesive layer with a surface of a pressure-sensitive adhesive layer to form the tape. Further, the pressure-sensitive adhesive layer comprises a blend of: b1) at least one poly(meth)acrylate, and b2) at least one selected from an elastomeric material and a thermoplastic elastomeric material.

According to a sixth aspect, the method of the fifth aspect is provided, further comprising: laminating the pressure-sensitive layer and the hot-melt adhesive layer onto each other.

According to a seventh aspect, the method of the fifth aspect is provided,
wherein the surface of the pressure-sensitive adhesive layer is melted during or prior to the contacting step.

### DETAILED DESCRIPTION OF THE PREFERRED EMBODIMENTS

Additional features and advantages will be set forth in the detailed description which follows and will be apparent to those skilled in the art from the description, or recognized by practicing the embodiments as described in the following description, together with the claims.

It has been found that the heat-sealable adhesive tapes of the disclosure (and the methods of making them) enable improved bond strengths between heat-sealable substrates and pre-treated substrates, e.g. plasma-treated or primered substrates. In particular, delayed breakage of the bondings compared with known adhesive tapes at a similar level of breaking force has been observed.

As used in the disclosure, the term "heat-sealable adhesive tape" refers to an adhesive tape which deploys bonding power to one of the substrates to be connected via a pressure-sensitive adhesive layer and after heating deploys bonding power to the second substrate to be connected via a hotmelt adhesive layer (thermoplastic sealing layer).

Further, the terms "hot-melt adhesive layer" and "heat-activatable adhesive layer" are used interchangeably in the disclosure and each refers to an adhesive which is not tacky or exhibits tackiness at a very low level only and will develop sufficient adhesion to effect an adhesive bond to a substrate only when it is heated. "Heating" normally means the influence of a temperature in the range of 60 to 200 °C, in particular in the range of 120 to 200 °C. In embodiments, the hot-melt adhesive layer is suited as hot-melt adhesive that has a melt flow range and a melt flow index of from 0.1 to 20 g/10 min (230 °C, load 2.16 kg), in particular from 0.2 to 10 g/10 min and especially from 0.3 to 1.5 g/10 min.

In some preferred implementations, the hot-melt adhesive layer is a polyolefin layer. The polyolefin can be traced back to one or more olefin monomers. Preferably, the material of the heat-activatable adhesive layer is selected from polyethylene, polypropylene, ethylenepropylene-copolymers and mixtures thereof. Preferably, the material of the heat-activatable adhesive layer is polypropylene (PP). The hot-melt layer can be a polypropylene blown film, also referred to as heterophasic copolymer (Heco) or Impact PP.

As used herein, the meaning of the expression "pressure-sensitive adhesive", abbreviated "PSA", is the generally accepted meaning: a substance which - in particular at room temperature - is durably tacky and adhesive. A pressure-sensitive adhesive has the characteristic feature that it can be applied by pressure to a substrate and continues to adhere thereon; neither the pressure that has to be exerted nor the duration of exposure to the said pressure is defined in any more detail. In some cases, depending on the precise type of pressure-sensitive adhesive, the temperature, the humidity, and the substrate material, a short period of exposure to a minimal pressure not exceeding gentle contact for a brief moment is sufficient to achieve the adhesion effect; in other cases there can also be a need for more prolonged exposure to a high pressure.

Pressure-sensitive adhesives have particular, characteristic viscoelastic properties which provide the durable tack and adhesion. They are characterized by having mechanical deformation that results not only in viscous flow processes, but also in build-up of elastic recovery forces. There is a particular relationship between the respective components provided by the two processes, this being dependent not only on the precise composition, on the structure and on the degree of crosslinking of the pressure-sensitive adhesive but also on the deformation rate and deformation time, and on the temperature.

The viscous flow component is necessary in order to achieve adhesion. The viscous components deriving from macromolecules with relatively high freedom of motion are solely responsible for good wetting and good flow onto the substrate requiring adhesive bonding. A large viscous flow component leads to high tack (also known as surface tack) and with this often also high adhesive bond strength. Highly crosslinked systems, and crystalline or glassy polymers, exhibit no, or only little, tack because they have insufficient flowable components.

The components providing elastic restoring forces are necessary to achieve cohesion. They derive by way of example from macromolecules that have very long chains and are highly intertwined, and also macromolecules that have been physically or chemically crosslinked, and they permit transmission of the forces acting on an adhesive bond. They allow an adhesive bond to withstand, to a sufficient extent for a prolonged period, a long-term load to which it is exposed, for example, taking the form of a long-term shear load.

The magnitude of elastic and viscous component and the ratio of the components to one another can be described and quantified more precisely by using the variables storage modulus (G') and loss modulus (G"), which can be determined by means of dynamic mechanical analysis (DMA). G' is a measure of the elastic component, and G" is a measure of the viscous component of a substance. Both variables depend on deformation frequency and temperature.

The variables can be determined with the aid of a rheometer. The material requiring investigation here is by way of example exposed in a plate-on-plate arrangement to a sinusoidally oscillating shear stress. In the case of shear-stress-controlled equipment, deformation is measured as a function of time, and the time-based offset of this deformation is measured relative to the introduction of the shear stress. This time-based offset is termed phase angle δ.

Storage modulus G' is defined as follows: G' = (τ/γ) •cos(δ) (τ = shear stress, γ = deformation, δ = phase angle = phase shift between shear stress vector and deformation vector). Loss modulus G" is defined as follows: G" = (τ/γ) •sin(δ) (τ = shear stress, γ = deformation, δ = phase angle = phase shift between shear stress vector and deformation vector). A substance is generally regarded as exhibiting "tack", and is defined as exhibiting tack for the purposes of the disclosure, if at room temperature, defined here as 23°C, in the deformation frequency range from 10⁰ to 10¹ rad/sec, G' is at least to some extent in the range from 10³ to 10⁷ Pa and G" is likewise at least to some extent in the said range. "To some extent" means that at least a section of the G' curve is within the window defined by the deformation frequency range from, and including, 10⁰ to, and including, 10¹ rad/sec (abscissa) and by the range of the G' values from, and including, 10³ to, and including, 10⁷ Pa (ordinate). For G" this applies correspondingly.

According to the disclosure, a "poly(meth)acrylate" is understood to be a polymer whose monomer basis consists to an extent of at least 60 wt% of acrylic acid, methacrylic acid, acrylic esters and/or methacrylic esters, with acrylic esters and/or methacrylic esters being present at least proportionally, preferably to an extent of at least 50 wt%, based on the overall monomer basis of the polymer in question. More particularly a "poly(meth)acrylate" is understood to be a polymer obtainable by radical polymerization of acrylic and/or methacrylic monomers and also, optionally, further, copolymerizable monomers.

In embodiments, the pressure-sensitive adhesive layer can include poly(meth)acrylate or poly(meth)acrylates that are present at 10 to 90 wt%, preferably 40 to 70 wt%, based on the total weight of the PSA (pressure-sensitive adhesive) layer. The PSA layer of the disclosure more preferably comprises 45 to 60 wt%, based on the total weight of the PSA layer, of at least one poly(meth)acrylate.

The glass transition temperature of the poly(meth)acrylates which can be used in accordance with the disclosure is preferably < 0°C, more preferably between -20 and -50°C. The glass transition temperature of polymers or of polymer blocks in block copolymers is determined in the context of this disclosure by means of dynamic scanning calorimetry (DSC). This involves weighing out about 5 mg of an untreated polymer sample into an aluminium crucible (volume 25 µL) and closing the crucible with a perforated lid. Measurement takes place using a Netzsch DSC 204 Fl. Operation takes place under nitrogen for inertization. The sample is first cooled to - 150°C, then heated to +150°C at a rate of 10 K/min, and cooled again to -150°C. The subsequent second heating plot is run again at 10 K/min, and the change in heat capacity is recorded. Glass transitions are recognized as steps in the thermogram.

According to embodiments of the disclosure, the poly(meth)acrylates of the PSA layer are obtainable preferably by at least proportional copolymerization of functional monomers which preferably are crosslinkable with epoxide groups. These monomers are more preferably those with acid groups (particularly carboxylic acid, sulphonic acid or phosphonic acid groups) and/or hydroxyl groups and/or acid anhydride groups and/or epoxide groups and/or amine groups; monomers containing carboxylic acid groups are especially preferred. It is very advantageous in particular if the poly(meth)acrylate features copolymerized acrylic acid and/or methacrylic acid. All of these groups have crosslinkability with epoxide groups, thereby making the poly(meth)acrylate amenable advantageously to thermal crosslinking with introduced epoxides.

Other monomers which may be used as comonomers for the poly(meth)acrylates, aside from acrylic and/or methacrylic esters having up to 30 C atoms per molecule, are, for example, vinyl esters of carboxylic acids containing up to 20 C atoms, vinylaromatics having up to 20 C atoms, ethylenically unsaturated nitriles, vinyl halides, vinyl ethers of alcohols containing 1 to 10 C atoms, aliphatic hydrocarbons having 2 to 8 C atoms and one or two double bonds, or mixtures of these monomers.

The properties of the poly(meth)acrylate in question may be influenced in particular by variation in the glass transition temperature of the polymer through different weight fractions of the individual monomers. The poly(meth)acrylate(s) of the disclosure may be traced back preferably to the following monomer composition:
(a) acrylic esters and/or methacrylic esters of the following formula:

   CH₂ = C(R^{I})(COOR^{II})

   where R^{I} = H or CH₃ and R^{II} is an alkyl radical having four (4) to fourteen (14) C atoms. Further, the monomer composition can include (b) olefinically unsaturated monomers having functional groups of the kind already defined for reactivity with preferably epoxide groups, and optionally may also include (c) acrylates and/or methacrylates and/or olefinically unsaturated monomers which are copolymerizable with component (a).

The fractions of the corresponding components (a), (b), and (c) are preferably selected such that the polymerization product has a glass transition temperature of less than < 0°C, more preferably between -20 and -50°C (DSC). It is particularly advantageous to select the monomers of the component (a) with a fraction of 45 to 99 wt%, the monomers of component (b) with a fraction of 1 to 15 wt% and the monomers of component (c) with a fraction of 0 to 40 wt% (the fractions are based on the monomer mixture for the "basic polymer", in other words without the addition of any additives to the completed polymer, such as resins).

The monomers of component (a) are more particularly plasticizing and/or non-polar monomers. Used preferably as monomers (a) are acrylic and methacrylic esters having alkyl groups consisting of 4 to 14 C atoms, more preferably 4 to 9 C atoms. Examples of such monomers are n-butyl acrylate, n-butyl methacrylate, n-pentyl acrylate, n-pentyl methacrylate, n-amyl acrylate, n-hexyl acrylate, n-hexyl methacrylate, n-heptyl acrylate, n-octyl acrylate, n-octyl methacrylate, n-nonyl acrylate and their branched isomers, such as isobutyl acrylate, isooctyl acrylate, isooctyl methacrylate, 2-ethylhexyl acrylate or 2-ethylhexyl methacrylate, for example.

The monomers of component (b) are more particularly olefinically unsaturated monomers having functional groups, more particularly having functional groups which are able to enter into a reaction with epoxide groups.

Used preferably for the component (b) are monomers having functional groups which are selected from the group encompassing the following: hydroxyl, carboxyl, sulphonic acid or phosphonic acid groups, acid anhydrides, epoxides, amines.

Particularly preferred examples of monomers of component (b) are acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, maleic anhydride, hydroxyethyl acrylate, more particularly 2-hydroxyethyl acrylate, hydroxypropyl acrylate, more particularly 3-hydroxypropyl acrylate, hydroxybutyl acrylate, more particularly 4-hydroxybutyl acrylate, hydroxyhexyl acrylate, more particularly 6-hydroxyhexyl acrylate, hydroxyethyl methacrylate, more particularly 2-hydroxyethyl methacrylate, hydroxypropyl methacrylate, more particularly 3-hydroxypropyl methacrylate, hydroxybutyl methacrylate, more particularly 4-hydroxybutyl methacrylate, hydroxyhexyl methacrylate, more particularly 6-hydroxyhexyl methacrylate, allyl alcohol, glycidyl acrylate and glycidyl methacrylate.

In principle it is possible to use as component (c) all vinylically functionalized compounds which are copolymerizable with component (a) and/or with component (b). The monomers of component (c) may serve to adjust the properties of the resultant PSA.

Exemplary monomers of component (c) are as follows: methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclohexyl acrylate, 3,5-dimethyladamantyl acrylate, 4-cumylphenyl methacrylate, cyanoethyl acrylate, cyanoethyl methacrylate, 4-biphenylyl acrylate, 4-biphenylyl methacrylate, 2-naphthyl acrylate, 2-naphthyl methacrylate, tetrahydrofurfuryl acrylate, diethylaminoethyl acrylate, diethylaminoethyl methacrylate, dimethylaminoethyl acrylate, dimethylaminoethyl methacrylate, 2-butoxyethyl acrylate, 2-butoxyethyl methacrylate, methyl 3-methoxy acrylate, 3-methoxybutyl acrylate, phenoxyethyl acrylate, phenoxyethyl methacrylate, 2-phenoxyethyl methacrylate, butyl diglycol methacrylate, ethylene glycol acrylate, ethylene glycol monomethylacrylate, methoxy polyethylene glycol methacrylate 350, methoxy polyethylene glycol methacrylate 500, propylene glycol monomethacrylate, butoxydiethylene glycol methacrylate, ethoxytriethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-methylundecyl)acrylamide, N-(n-butoxymethyl)acrylamide, N-(butoxymethyl)methacrylamide, N-(ethoxymethyl)acrylamide, N-(n-octadecyl)acrylamide, and also N,N-dialkyl-substituted amides, such as, for example, N,N-dimethylacrylamide, N,N-dimethylmethacrylamide, N-benzylacrylamides, N-isopropylacrylamide, N-tert-butylacrylamide, N-tert-octylacrylamide, N-methylolacrylamide, N-methylolmethacrylamide, acrylonitrile, methacrylonitrile, vinyl ethers, such as vinyl methyl ether, ethyl vinyl ether, and vinyl isobutyl ether, vinyl esters, such as vinyl acetate, vinyl chloride, vinyl halides, vinylidene chloride, vinylidene halides, vinylpyridine, 4-vinylpyridine, N-vinylphthalimide, N-vinyllactam, N-vinylpyrrolidone, styrene, α- and p-methylstyrene, α-butylstyrene, 4-n-butylstyrene, 4-n-decylstyrene, 3,4-dimethoxystyrene, and macromonomers such as 2-polystyreneethyl methacrylate (weight-average molecular weight M_{w}, determined by means of GPC, of 4000 to 13000 g/mol), and poly(methyl methacrylate)ethyl methacrylate (M_{w} of 2000 to 8000 g/mol).

Monomers of component (c) may advantageously also be selected such that they include functional groups which support a subsequent radiation-chemical crosslinking (by electron beams or UV, for example). Suitable copolymerizable photoinitiators are, for example, benzoin acrylate and acrylate-functionalized benzophenone derivatives. Monomers which support crosslinking by electron bombardment are, for example, tetrahydrofurfuryl acrylate, N-tert-butylacrylamide and allyl acrylate.

The polyacrylates ("polyacrylates" are understood in the context of the disclosure to be synonymous with "poly(meth)acrylates") may be prepared by methods familiar to the skilled person, especially advantageously by conventional radical polymerizations or controlled radical polymerizations. The polyacrylates may be prepared by copolymerization of the monomeric components using the customary polymerization initiators and also, optionally, chain transfer agents, the polymerization being carried out at the customary temperatures in bulk, in emulsion, for example in water or liquid hydrocarbons, or in solution.

Polyacrylates are prepared preferably by polymerization of the monomers in solvents, more particularly in solvents having a boiling range of 50 to 150°C, preferably of 60 to 120°C, using the customary amounts of polymerization initiators, which in general are 0.01 to 5, more particularly 0.1 to 2 wt% (based on the total weight of the monomers).

Suitable in principle are all customary initiators familiar to the skilled person. Examples of radical sources are peroxides, hydroperoxides and azo compounds, for example dibenzoyl peroxide, cumene hydroperoxide, cyclohexanone peroxide, di-tert-butyl peroxide, cyclohexylsulfonyl acetyl peroxide, diisopropyl percarbonate, tert-butyl peroctoate and benzopinacol. One preferred procedure uses as radical initiator 2,2'-azobis(2-methylbutyronitrile) (Vazo^{®} 67^{™} from DuPont) or 2,2'-azobis(2-methylpropionitrile) (2,2'-azobisisobutyronitrile; AIBN; Vazo^{®} 64^{™} from DuPont).

Solvents suitable for preparing the poly(meth)acrylates include alcohols such as methanol, ethanol, n- and isopropanol, n- and isobutanol, preferably isopropanol and/or isobutanol, and also hydrocarbons such as toluene and more particularly petroleum spirits with a boiling range from 60 to 120°C. Further possibilities for use include ketones such as preferably acetone, methyl ethyl ketone and methyl isobutyl ketone, and esters such as ethyl acetate, and also mixtures of solvents of the type stated, with preference being given to mixtures which comprise isopropanol, more particularly in amounts of 2 to 15 wt%, preferably 3 to 10 wt%, based on the solvent mixture employed.

The preparation (polymerization) of the polyacrylates is followed preferably by a concentration procedure, and the further processing of the polyacrylates takes place with substantial absence of solvent. The concentration of the polymer may be effected in the absence of crosslinker and accelerator substances. Also possible, however, is the addition of one of these classes of compound to the polymer even prior to the concentration, so that the concentration then takes place in the presence of said substance(s).

Alternatively, poly(meth)acrylates resulting from UV-initiated polymerization (UV syrups) can be advantageously used. In this case, the concentration step as set forth above may be omitted. The polymers can be transferred into a compounder after the polymerization or after the concentration step if necessary. If appropriate, the concentration and the compounding may also take place in the same reactor.

The weight-average molecular weights M_{w} of the polyacrylates are preferably in a range from 20,000 to 2,000,000 g/mol; very preferably in a range from 100,000 to 1,500,000 g/mol, most preferably in a range from 150,000 to 1,000,000 g/mol. The figures for average molecular weight M_{w} and for polydispersity PD in this specification relate to the determination by gel permeation chromatography. For this purpose it may be advantageous to carry out the polymerization in the presence of suitable chain transfer agents such as thiols, halogen compounds and/or alcohols, in order to set the desired average molecular weight.

The figures for the number-average molar mass Mₙ and the weight-average molar mass M_{w} in this specification relate to the determination by gel permeation chromatography (GPC). The determination takes place on 100 µl of a sample which has undergone clarifying filtration (sample concentration 4 g/l). Tetrahydrofuran with 0.1 vol % of trifluoroacetic acid is used as eluent. The measurement is made at 25°C.

The preliminary column used is a PSS-SDV column, 5 µm, 10³ Å, 8.0 mm * 50 mm (figures here and below in the following sequence: type, particle size, porosity, internal diameter * length; 1 Å = 10⁻¹⁰ m). Separation takes place using a combination of columns of type PSS-SDV, 5 µm, 10³ Å and also 10⁵ Å and 10⁶ Å each with 8.0 mm * 300 mm (columns from Polymer Standards Service; detection by means of Shodex RI71 differential refractometer). The flow rate is 1.0 ml per minute. Calibration for polyacrylates is made against PMMA standards (polymethyl methacrylate calibration) and for others (resins, elastomers) against PS standards (polystyrene calibration).

The polyacrylates preferably have a K value of 30 to 90, more preferably of 40 to 70, measured in toluene (1% strength solution, 21°C). The K value according to Fikentscher is a measure of the molecular weight and of the viscosity of the polymer.

The principle of the method derives from the determination of the relative solution viscosity by capillary viscometry. For this purpose, the test substance is dissolved in toluene by shaking for thirty minutes, to give a 1% strength solution. In a Vogel-Ossag viscometer at 25°C the flow time is measured and is used to derive, in relation to the viscosity of the pure solvent, the relative viscosity of the sample solution. In accordance with Fikentscher, the K value (K = 1000 k) can be read off from tables, as understood by those with ordinary skill in the field of the disclosure [see P. E. Hinkamp, Polymer, 1967, 8, p. 381].

Particularly suitable in accordance with the disclosure are polyacrylates which have a narrow molecular weight distribution range (polydispersity PD < 4). These materials, in spite of a relatively low molecular weight after crosslinking, have a particularly good shear strength. The relatively low polydispersity also facilitates processing from the melt, since the flow viscosity is lower than for a broader-range polyacrylate while application properties are largely the same. Narrow-range poly(meth)acrylates can be prepared advantageously by anionic polymerization or by controlled radical polymerization methods, the latter being especially suitable. Via N-oxyls as well, it is possible to prepare such polyacrylates. Furthermore, advantageously, Atom Transfer Radical Polymerization (ATRP) may be employed for the synthesis of narrow-range polyacrylates, the initiator used comprising preferably monofunctional or difunctional secondary or tertiary halides and the halide(s) being abstracted using complexes of Cu, Ni, Fe, Pd, Pt, Ru, Os, Rh, Co, Ir, Ag or Au. Furthermore, RAFT-polymerization technique is very favourable.

The monomers for preparing the poly(meth)acrylates preferably include: proportionally functional groups suitable for entering into linking reactions with epoxide groups. This advantageously permits thermal crosslinking of the polyacrylates by reaction with epoxides. Linking reactions are understood to be, in particular, addition reactions and substitution reactions. Preferably, therefore, there is a linking of the building blocks carrying the functional groups to building blocks carrying epoxide groups, more particularly in the sense of a crosslinking of the polymer building blocks carrying the functional groups via linking bridges comprising crosslinker molecules which carry epoxide groups. The substances containing epoxide groups are preferably polyfunctional epoxides, in other words those having at least two epoxide groups; accordingly, the overall result is preferably an indirect linking of the building blocks carrying the functional groups.

According to embodiments of the disclosure, the poly(meth)acrylates of the PSA layer of the disclosure are crosslinked, preferably by linking reactions - especially in the sense of addition reactions or substitution reactions - of functional groups they contain with thermal crosslinkers. All thermal crosslinkers may be used which not only ensure a sufficiently long processing life, meaning that there is no gelling during the processing operation, particularly the extrusion operation, but also lead to rapid postcrosslinking of the polymer to the desired degree of crosslinking at temperatures lower than the processing temperature, more particularly at room temperature. Possible, for example, is a combination of carboxyl-, amino- and/or hydroxyl-containing polymers and isocyanates, more particularly aliphatic or trimerized isocyanates deactivated with amines, as crosslinkers.

Suitable isocyanates are, more particularly, trimerized derivatives of MDI [4,4'-methylenedi(phenyl isocyanate)], HDI [hexamethylene diisocyanate, 1,6-hexylene diisocyanate] and/or IPDI [isophorone diisocyanate, 5-isocyanato-1-isocyanatomethyl-1,3,3-trimethylcyclohexane], examples being the types Desmodur^{®} N3600 and XP2410 (each BAYER AG: aliphatic polyisocyanates, low-viscosity HDI trimers). Likewise suitable is the surface-deactivated dispersion of micronized trimerized IPDI BUEJ 339^{®}, now HF9^{®} (BAYER AG). Also suitable in principle for the crosslinking, however, are other isocyanates such as Desmodur VL 50 (MDI-based polyisocyanate, Covestro), Basonat F200WD (aliphatic polyisocyanate, BASF), Basonat HW100 (water-emulsifiable polyfunctional, HDI-based isocyanate, BASF), Basonat HA 300 (allophanate-modified polyisocyanate based on HDI isocyanurate, BASF) or Bayhydur VPLS2150/1 (hydrophilically modified IPDI, Covestro). Preference is given to using thermal crosslinkers at 0.1 to 5 wt%, more particularly at 0.2 to 1 wt%, based on the total amount of the polymer to be crosslinked.

According to some embodiments, the poly(meth)acrylates of the PSA layer are crosslinked preferably by means of one or more epoxides or one or more substances containing epoxide groups. The substances containing epoxide groups are more particularly polyfunctional epoxides, in other words, those having at least two epoxide groups; accordingly, the overall result is an indirect linking of the building blocks of the poly(meth)acrylates that carry the functional groups. The substances containing epoxide groups may be aromatic compounds and may be aliphatic compounds.

Suitable polyfunctional epoxides include: oligomers of epichlorohydrin, epoxy ethers of polyhydric alcohols (more particularly ethylene, propylene and butylene glycols, polyglycols, thiodiglycols, glycerol, pentaerythritol, sorbitol, polyvinyl alcohol, polyallyl alcohol and the like), epoxy ethers of polyhydric phenols [more particularly resorcinol, hydroquinone, bis(4-hydroxyphenyl)methane, bis(4-hydroxy-3-methylphenyl)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichloroethane, bis(4-hydroxyphenyl)(4-chlorophenyl)methane, 1,1-bis(4-hydroxyphenyl)cyclohexane, bis(4-hydroxyphenyl)cyclohexylmethane, 4,4'-dihydroxybiphenyl, 2,2'-dihydroxybiphenyl, 4,4'-dihydroxydiphenyl sulfone] and also their hydroxyethyl ethers, phenol-formaldehyde condensation products, such as phenol alcohols, phenol aldehyde resins and the like, S- and N-containing epoxides (for example N,N-diglycidylaniline, N,N'-dimethyldiglycidyl-4,4-diaminodiphenylmethane) and also epoxides prepared by customary methods from polyunsaturated carboxylic acids or monounsaturated carboxylic esters of unsaturated alcohols, glycidyl esters, polyglycidyl esters, which may be obtained by polymerization or copolymerization of glycidyl esters of unsaturated acids or are obtainable from other acidic compounds (cyanuric acid, diglycidyl sulfide, cyclic trimethylene trisulfone and/or derivatives thereof, and others).

Suitable ethers include: 1,4-butanediol diglycidyl ether, polyglycerol-3 glycidyl ether, cyclohexanedimethanol diglycidyl ether, glycerol triglycidyl ether, neopentyl glycol diglycidyl ether, pentaerythritol tetraglycidyl ether, 1,6-hexanediol diglycidyl ether, polypropylene glycol diglycidyl ether, trimethylolpropane triglycidyl ether, bisphenol A diglycidyl ether and bisphenol F diglycidyl ether.

Particularly preferred for the poly(meth)acrylates as polymers to be crosslinked is the use of a crosslinker-accelerator system ("crosslinking system"), as described in U.S. Patent No. 8,802,777, issued on August 12, 2014. The use of the crosslinker-accelerator system can afford more effective control over not only the processing life and crosslinking kinetics but also the degree of crosslinking. The crosslinker-accelerator system comprises at least one substance containing epoxide groups, as crosslinker, and at least one substance which has an accelerating effect on crosslinking reactions by means of epoxide-functional compounds at a temperature below the melting temperature of the polymer to be crosslinked, as accelerator.

Accelerators used in accordance with the disclosure are more preferably amines (to be interpreted formally as substitution products of ammonia; in the formulae below, these substituents are represented by "R" and encompass, in particular, alkyl and/or aryl radicals and/or other organic radicals), more preferably those amines which enter into no reactions or only slight reactions with the building blocks of the polymers to be crosslinked. Selectable in principle as accelerators are primary (NRH₂), secondary (NR₂H) and tertiary (NR₃) amines, and also of course those which have two or more primary and/or secondary and/or tertiary amine groups. Particularly preferred accelerators, however, are tertiary amines such as, for example, triethylamine, triethylenediamine, benzyldimethylamine, dimethylaminomethylphenol, 2,4,6-tris-(N,N-dimethylamino-methyl)phenol and N,N'-bis(3-(dimethylamino)propyl)urea. As accelerators it is also possible with advantage to use polyfunctional amines such as diamines, triamines and/or tetramines. Outstandingly suitable are diethylenetriamine, triethylenetetramine and trimethylhexamethylenediamine, for example.

Used with preference as accelerators, furthermore, are amino alcohols. Particular preference is given to using secondary and/or tertiary amino alcohols, where in the case of two or more amine functionalities per molecule, preferably at least one, and preferably all, of the amine functionalities are secondary and/or tertiary. As preferred amino-alcohol accelerators it is possible to employ triethanolamine, N,N-bis(2-hydroxypropyl)ethanolamine, N-methyldiethanolamine, N-ethyldiethanolamine, 2-aminocyclohexanol, bis(2-hydroxycyclohexyl)methylamine, 2-(diisopropylamino)ethanol, 2-(dibutylamino)ethanol, N-butyldiethanolamine, N-butylethanolamine, 2-[bis(2-hydroxyethyl)amino]-2-(hydroxymethyl)-1,3-propanediol, 1-[bis(2-hydroxyethyl)amino]-2-propanol, triisopropanolamine, 2-(dimethylamino)ethanol, 2-(diethylamino)ethanol, 2-(2-dimethylaminoethoxy)ethanol, N,N,N'-trimethyl-N'-hydroxyethyl bisaminoethyl ether, N,N,N'-trimethylaminoethylethanolamine and/or N,N,N'-trimethylaminopropyl-ethanolamine.

Other suitable accelerators are pyridine, imidazoles (such as, for example, 2-methylimidazole) and 1,8-diazabicyclo[5.4.0]undec-7-ene. Cycloaliphatic polyamines, as well, may be used as accelerators. Suitable also are phosphate-based accelerators such as phosphines and/or phosphonium compounds, such as triphenylphosphine or tetraphenylphosphonium tetraphenylborate, for example.

According to the invention the PSA layer comprises at least one selected from an elastomeric and a thermoplastic elastomeric material (the entirety of elastomeric and thermoplastic elastomeric materials of the pressure-sensitive adhesive layer hereinafter being referred to also as "component b2)"). In accordance with the disclosure, elastomeric and thermoplastic elastomeric materials are preferably present in the PSA layer at 10 to 90 wt%, based on the total weight of the PSA layer. The PSA layer more preferably comprises 15 to 50 wt%, preferably 20 to 40 wt%, of elastomeric and thermoplastic elastomeric materials, based on the total weight of the PSA layer. For the sake of clarity, "elastomeric and thermoplastic elastomeric materials being present at a certain amount in the PSA layer" means that there can be one or more elastomeric materials, one or more thermoplastic elastomeric materials or a mixture of elastomeric and thermoplastic elastomeric materials within the pressure-sensitive adhesive layer. Further, in some implementations, the PSA layer can comprise a blend of (bl) at least one poly(meth)acrylate (i.e., as outlined earlier); and b2) at least one selected from an elastomeric material and a thermoplastic-elastomeric material.

In a preferred embodiment, component b2) comprises at least one synthetic rubber. Preferably, if component b2) comprises a synthetic rubber, at least one synthetic rubber of component b2) is a block copolymer having an A-B, A-B-A, (A-B)ₙ, (A-B)ₙX or (A-B-A)ₙX construction, in which the blocks A independently of one another are a polymer formed by polymerization of at least one vinylaromatic; the blocks B independently of one another are a polymer formed by polymerization of conjugated dienes having 4 to 18 C atoms and/or isobutylene, or are a partially or fully hydrogenated derivative of such a polymer; X is the residue of a coupling reagent or initiator; and n is an integer ≥ 2.

In particular, all synthetic rubbers and most preferably all elastomeric and thermoplastic elastomeric materials of the PSA layer of the disclosure are block copolymers having a construction, as set out above. The PSA layer of the disclosure may therefore also comprise mixtures of different block copolymers having a construction as above.

Suitable block copolymers (vinylaromatic block copolymers) therefore comprise one or more rubberlike blocks B (soft blocks) and one or more glasslike blocks A (hard blocks). With particular preference at least one synthetic rubber is a block copolymer having an A-B, A-B-A, (A-B)₂X, (A-B)₃X or (A-B)₄X construction, where A, B and X have the definitions above. Very preferably all synthetic rubbers of component b2) are block copolymers having an A-B, A-B-A, (A-B)₂X, (A-B)₃X or (A-B)₄X construction, wherein A, B and X have the definitions above. More particularly the synthetic rubber of component b2) is a mixture of block copolymers having an A-B, A-B-A, (A-B)₂X, (A-B)₃X or (A-B)₄X construction, said mixture preferably comprising at least one of diblock copolymers A-B, triblock copolymers A-B-A and triblock copolymers (A-B)₂X.

The block A is generally a glasslike block having a preferred glass transition temperature (Tg, DSC), which is above room temperature. More preferably the Tg of the glasslike block is at least 40°C, more particularly at least 60°C, very preferably at least 80°C and extremely preferably at least 100°C. The fraction of vinylaromatic blocks A in the overall block copolymers is preferably 10 to 40 wt%, more preferably 20 to 33 wt%. Vinylaromatics for the construction of the block A include preferably styrene, α-methylstyrene and/or other styrene derivatives. The block A may therefore take the form of a homopolymer or a copolymer. With particular preference the block A is a polystyrene.

The vinylaromatic block copolymer further generally has a rubberlike block B or soft block having a preferred Tg of less than room temperature. The Tg of the soft block is more preferably less than 0°C, more particularly less than -10°C, preferably, less than -40°C, and very preferably less than -60°C.

Preferred conjugated dienes as monomers for the soft block B are selected in particular from the group consisting of butadiene, isoprene, ethyl butadiene, phenyl butadiene, piperylene, pentadiene, hexadiene, ethyl hexadiene, dimethyl butadiene and the farnesene isomers, and also any desired mixtures of these monomers. The block B as well may take the form of a homopolymer or a copolymer.

With particular preference the conjugated dienes as monomers for the soft block B are selected from butadiene and isoprene. For example, the soft block B is a polyisoprene, a polybutadiene or a partially or fully hydrogenated derivative of one of these two polymers, such as polybutylene-butadiene in particular; or is a polymer of a mixture of butadiene and isoprene. Very preferably the block B is a polybutadiene.

Preferably, the pressure-sensitive adhesive layer of the heat-sealable adhesive tape, according to the disclosure, further comprises at least one tackifier which is compatible with the poly(meth)acrylate(s), and which may also be referred to as a bond strength booster or tackifier resin. In line with the general understanding of the skilled person, the terms "tackifier", "bond strength booster" and "tackifier resin" are used interchangeably in the disclosure to be an oligomeric or polymeric resin which raises the autohesion (the tack or inherent stickiness) of the PSA layer by comparison with a PSA layer devoid of tackifier but otherwise identical.

A "tackifier compatible with the poly(meth)acrylate(s)" is understood to be a tackifier which has the effect on the system obtained after thorough mixing of poly(meth)acrylate and tackifier of changing its glass transition temperature by comparison with the pure poly(meth)acrylate, it also being possible to assign only one Tg to the mixture of poly(meth)acrylate and tackifier. In the system obtained after thorough mixing of poly(meth)acrylate and tackifier, a tackifier that was not compatible with the poly(meth)acrylate(s) would result in two Tgs, one assignable to the poly(meth)acrylate and the other to the resin domains. In this connection, the Tg is determined calorimetrically by means of DSC (differential scanning calorimetry).

The poly(meth)acrylate-compatible resins of the pressure-sensitive adhesive layer preferably have a Diacetone Alcohol Cloud Point ("DACP") of less than 0°C, very preferably of not more than -20°C, and/or preferably a Mixed Methylcyclohexane-Aniline Point ("MMAP") of less than 40°C, very preferably of not more than 20°C. With regard to the determination of DACP and MMAP values, those with ordinary skill in the field of the disclosure can measure and calculate them as described in C. Donker, PSTC Annual Technical Seminar, Proceedings, pp. 149-164, May 2001.

With preference in accordance with the disclosure the tackifier compatible with the poly(meth)acrylates is a terpene-phenolic resin or a rosin derivative, more preferably a terpene-phenolic resin. The PSA layer may also comprise mixtures of two or more tackifiers. Among the rosin derivatives, rosin esters are preferred.

The PSA layer of the heat-sealable tape comprises preferably from 7 to 40 wt%, more preferably 10 to 25 wt% based on the total weight of the PSA layer, of at least one tackifier compatible with the poly(meth)acrylates. With particular preference the tackifier or tackifiers compatible with the poly(meth)acrylates is or are present at 12 to 20 wt%, based on the total weight of the PSA layer.

The tackifier or tackifiers compatible with the poly(meth)acrylates in the PSA layer are preferably also compatible, or at least partly compatible, with the elastomeric and thermoplastic elastomeric materials (component b2)), the above definition of the term "compatible" applying correspondingly. Polymer/resin compatibility is dependent on factors including the molar mass of the polymers and/or resins. The lower the molar mass(es), the better the compatibility. For a given polymer it may be the case that the low molecular mass constituents in the resin molar mass distribution are compatible with the polymer, while those of higher molecular mass are not. This is an example of partial compatibility.

The weight ratio of the entirety of all poly(meth)acrylates (referred herein as "component b1)") to the entirety of all elastomeric and thermoplastic elastomeric materials (again, referred herein as "component b2)") in the PSA layer is preferably from 1:1 to 3:1, more particularly from 1.8:1 to 2.2:1.

The weight ratio of tackifiers compatible with the poly(meth)acrylates to component b2) in the PSA layer is preferably at most 2:1, more particularly at most 1:1. This weight ratio is preferably at least 1:4.

According to some implementations of the heat-sealable adhesive tapes of the disclosure, the pressure-sensitive adhesive layer includes: 50 - 60 wt%, based on the total weight of the PSA layer, of at least one poly(meth)acrylate; 20 - 40 wt%, based on the total weight of the PSA layer, of at least one selected from elastomeric and thermoplastic elastomeric material; and 7 - 25 wt%, based on the total weight of the PSA layer, of at least one tackifier compatible with the poly(meth)acrylate(s).

Within the PSA layer, the elastomeric and thermoplastic elastomeric materials are preferably in dispersion in the poly(meth)acrylate. Accordingly, poly(meth)acrylate and the elastomeric and thermoplastic elastomeric materials are preferably each homogeneous phases. The poly(meth)acrylates and the elastomeric and thermoplastic elastomeric materials present in the PSA are preferably selected such that at 23°C they are not miscible with one another to the point of homogeneity, at least microscopically and at least at room temperature; therefore, the PSA of the disclosure preferably has at least two-phase morphology. More preferably, poly(meth)acrylate(s) and the elastomeric and thermoplastic elastomeric materials are not homogeneously miscible with one another in a temperature range from 0°C to 50°C, more particularly from -30°C to 80°C and so in these temperature ranges, at least microscopically, the PSA is present in at least two-phase form. Often, three phases are present as set forth below.

As used in the disclosure, components are defined as being "not homogeneously miscible with one another" when even after intimate mixing, the formation of at least two stable phases is detectable physically and/or chemically, at least microscopically, with one phase being rich in one component and the second phase being rich in the other component. The presence of negligibly small amounts of one component in the other, without opposing the development of the multi-phase character, is considered immaterial in this context. Hence, the poly(meth)acrylate phase may contain small amounts of elastomeric and/or thermoplastic elastomeric materials and/or the elastomeric and thermoplastic elastomeric materials phase may contain small amounts of poly(meth)acrylate component, as long as these amounts are not substantial amounts which influence phase separation.

Phase separation may be realized in particular such that discrete regions ("domains") which are rich in component b2) - in other words, are essentially formed of elastomeric and/or thermoplastic elastomeric materials - are present in a continuous matrix which is rich in poly(meth)acrylate - in other words, is essentially formed of poly(meth)acrylate. One suitable system of analysis for a phase separation is scanning electron microscopy, for example. Alternatively, phase separation may be detected, for example, by the different phases having two glass transition temperatures, independent of one another, on differential scanning calorimetry ("DSC"). Phase separation is present in accordance with the disclosure when it can clearly be shown by at least one of the analytical techniques.

Additional multi-phasedness may also be present as a fine structure within the elastomeric and thermoplastic elastomeric materials-rich domains, with the A blocks forming one phase and the B blocks forming a second phase.

The PSA layer may comprise one or more hydrocarbon resin(s) that are incompatible with the poly(meth)acrylate. Hydrocarbon resins of this kind, which are likewise tackifiers, preferably include hydrogenated polymers of dicyclopentadiene; unhydrogenated, partially hydrogenated, selectively hydrogenated or fully hydrogenated hydrocarbon resins based on C5, C5/C9 or C9 monomer streams, and polyterpene resins based on α-pinene and/or β-pinene and/or δ-limonene. The hydrocarbon resins preferably have a DACP value of at least 0°C, very preferably of at least 20°C, and/or preferably an MMAP value of at least 40°C, very preferably of at least 60°C. The aforementioned hydrocarbon resins may be present in the PSA layer either individually or in a mixture. Particularly preferred hydrocarbon resins are polyterpene resins based on α-pinene and/or β-pinene and/or δ-limonene.

According to some implementations, the pressure-sensitive adhesive layer of a heat-sealable adhesive tape is foamed. Foaming may take place by means of any chemical and/or physical methods. Preferably, however, a foamed PSA layer of the disclosure is obtained by the introduction and subsequent expansion of microballoons. "Microballoons" are understood to be hollow microspheres which are elastic and therefore expandable in their basic state, having a thermoplastic polymer shell. These spheres are filled with low-boiling liquids or with liquefied gas. Shell material used includes, in particular, polyacrylonitrile, PVDC, PVC or polyacrylates. Suitable low-boiling liquid includes, in particular, hydrocarbons of the lower alkanes, such as isobutane or isopentane, for example, which are enclosed in the form of liquefied gas under pressure in the polymer shell.

As a result of exposure of the microballoons, more particularly exposure to heat, the outer polymer shell undergoes softening. At the same time, the liquid propellant gas present within the shell undergoes transition to its gaseous state. At this point, the microballoons undergo an irreversible and three-dimensional expansion. Expansion is at an end when the internal pressure matches the external pressure. Since the polymeric shell is retained, a closed-cell foam is obtained accordingly.

If foaming is carried out using microballoons, the microballoons may be supplied to the PSA formulation in the form of a batch, paste or extended or unextended powder. Conceivable metering points are, for example, before or after the point of addition of the poly(meth)acrylate, for instance together as a powder with the elastomeric and/or thermoplastic elastomeric materials or as a paste at a later point in time.

Various types of microballoons are available commercially, and differ essentially in their size (6 to 45 µm diameter in the unexpanded state) and in the initiation temperatures they require for expansion (75 to 220°C). One example of commercially available microballoons are the Expancel^{®} DU products (DU = dry unexpanded) from Akzo Nobel. Unexpanded microballoon products are also available as an aqueous dispersion with a solids fraction or microballoon fraction at about 40 to 45 wt%, and also, moreover, as polymer-bonded microballoons (master batches), for example in ethyl vinyl acetate with a microballoon concentration of about 65 wt%. Not only the microballoon dispersions but also the master batches, like the DU products, are suitable for producing a foamed PSA layer of the disclosure.

A foamed PSA layer may also be produced with so-called pre-expanded microballoons. With this group, the expansion takes place prior to mix incorporation into the polymer matrix. Pre-expanded microballoons are available commercially for example under the designation Dualite^{®} or with the type designation DE (Dry Expanded).

According to embodiments of the disclosure, the density of a foamed PSA layer is preferably 200 to 1000 kg/m³, more preferably 300 to 900 kg/m³, more particularly 400 to 800 kg/m³. Depending on the area of application and desired properties of the PSA layer, it may be admixed with other components and/or additives, in each case alone or in combination with one or more further additives or components. Thus, for example, the PSA layer may comprise fillers, dyes and pigments in powder and granule form, including abrasive and reinforcing versions, such as chalks (CaCO₃), titanium dioxide, zinc oxide and/or carbon blacks, for example.

According to some embodiments of the heat-sealable adhesive tapes, the PSA layer comprises one or more forms of chalk as filler, more preferably Mikrosöhl chalk (from Söhlde). In preferred fractions of up to 20 wt%, the addition of filler causes virtually no change to the technical adhesive properties (shear strength at room temperature, instantaneous bond strength to steel and PE). Furthermore, different organic fillers may be included. Suitable additives for the PSA layer further include - selected independently of other additives - non-expandable hollow polymer beads, solid polymer beads, hollow glass beads, solid glass beads, hollow ceramic beads, solid ceramic beads and/or solid carbon beads ("Carbon Micro Balloons").

The PSA may additionally comprise low-flammability fillers, for example, ammonium polyphosphate; electrically conductive fillers, for example, conductive carbon black, carbon fibres and/or silver-coated beads; thermally conductive materials such as, for example, boron nitride, aluminium oxide, silicon carbide; ferromagnetic additives, for example, iron(III) oxides; organic renewable raw materials such as, for example, wood flour, organic and/or inorganic nanoparticles, fibres; compounding agents, ageing inhibitors, light stabilizers and/or anti-ozonants. Plasticizers may optionally be included. Plasticizers added may be, for example, (meth)acrylate oligomers, phthalates, cyclohexanedicarboxylic esters, water-soluble plasticizers, plasticizer resins, phosphates or polyphosphates. The addition of silicas, advantageously of precipitated silica surface-modified with dimethyldichlorosilane, may be utilized in order to adjust the thermal shear strength of the PSA layer.

A method for making or otherwise producing the PSA layer may initially comprise a procedure of concentrating the poly(meth)acrylate solution or dispersion resulting from polymer preparation. Concentration of the polymer may be effected in the absence of crosslinker and accelerator substances. It is, however, also possible to add not more than one of these substances to the polymer prior to concentration, with the concentration then taking place in the presence of this or these substance(s).

Elastomeric and/or thermoplastic elastomeric materials may be added together with the poly(meth)acrylate-compatible resin by a solids metering facility into a compounder. Via a side feeder, the concentrated and optionally already melted poly(meth)acrylate can be introduced into the compounder. In particular versions of the process it is also possible for concentration and compounding to take place in the same reactor. If intended, the poly(meth)acrylate-compatible resins may also be supplied via a resin melt and a further side feeder at a different position in the process, such as following introduction of component b2) and poly(meth)acrylate, for example. Further additives and/or plasticizers may likewise be supplied as solids or a melt or else a batch in combination with another formulation component.

A compounder employed in the method may in particular be an extruder. In the compounder, the polymers are preferably in the melt, either since they are introduced already in the melt state or because they are heated to the melt state in the compounder. The polymers are advantageously maintained in the melt state within the compounder by heating.

If accelerator substances for the crosslinking of the poly(meth)acrylate are employed according to the method, they are preferably not added to the polymers until shortly before further processing, in particular, prior to coating or other forms of shaping. The time window of the addition prior to coating is guided in particular by the pot life that is available, in other words the processing life in the melt, without deleterious changes to the properties of the resulting product. The crosslinkers, epoxides, for example, and the accelerators may also both be added shortly before the further processing of the composition, in other words, advantageously, in the phase as set out above for the accelerators. For this purpose it is advantageous if crosslinkers and accelerators are introduced into the operation simultaneously at the same location, optionally in the form of an epoxide/accelerator blend. In principle it is also possible to switch the times and locations of addition for crosslinkers and accelerators in the versions set out above, so that the accelerator may be added before the crosslinker substances.

After the PSA material of the PSA layer has been compounded, it may be further-processed before being laminated onto the hot-melt adhesive layer of the heat-sealable adhesive tape according to the disclosure, more particularly by coating onto a permanent or temporary carrier. A permanent carrier remains joined to the layer of adhesive in the application, while the temporary carrier is removed from the layer of adhesive in the ongoing processing operation.

In the case of coating the PSA layer onto a permanent or temporary carrier, such coating may take place with hot melt coating nozzles known to the skilled person or, preferably, with roll applicator mechanisms, also called coating calenders. The coating calenders may consist advantageously of two, three, four or more rolls. Preferably at least one of the rolls is provided with an anti-adhesive roll surface. With preference all rolls of the calender that come into contact with the PSA are anti-adhesively surfaced. Employed preferably as an anti-adhesive roll surface is a steel-ceramic-silicone composite. Such roll surfaces are resistant to thermal and mechanical loads.

It has emerged as being particularly advantageous if roll surfaces are used that have a surface structure, more particularly such that the surface does not make complete contact with the layer of composition being processed, the area of contact instead being smaller by comparison with a smooth roll. Particularly favourable are structured rolls such as engraved metal rolls - engraved steel rolls, for example.

According to the invention, a method for making a heat-sealable adhesive tape is provided that includes: providing a hot-melt adhesive layer; treating a surface of the hot-melt adhesive layer with a CO₂-corona to define a treated surface; and contacting the treated surface of the hot-melt adhesive layer with a surface of a pressure-sensitive adhesive layer. Further, the pressure-sensitive adhesive layer comprises a blend of: b1) at least one poly(meth)acrylate, and b2) at least one selected from an elastomeric material and a thermoplastic elastomeric material.

It has been observed that such corona treatment of the hot-melt adhesive layer improves the anchorage strength towards the pressure-sensitive adhesive layer, even compared to air or nitrogen corona. It has not been necessary to pretreat the pressure-sensitive adhesive layer.

The method according to the disclosure has proven to effect improved anchorage strength between the hot-melt adhesive layer a) and the pressure-sensitive adhesive layer b) of the heat-sealable adhesive tape, as configured according to the disclosure. All preferences, embodiments, etc. regarding the poly(meth)acrylate and the elastomeric or thermoplastic elastomeric material, as well as further aspects of the pressure-sensitive adhesive layer b) of the heat-sealable adhesive tape according to the disclosure, apply for the PSA layer of the method according to the disclosure, too.

It has further been found that the CO₂ corona treatment of the hot-melt adhesive layer contributed to improved humidity and plasticizer resistance and therefore enabled heat-sealable adhesive tapes having high cohesive strength and shear resistance in the application. Corona treatment refers to surface treatment with filamentary discharges that is generated by high alternating voltage between two electrodes, with the discrete discharge channels impinging on the substrate surface to be treated. More particularly, the term "corona" usually refers to "dielectric barrier discharge" (DBD). In this case at least one of the electrodes consists of a dielectric, in other words an insulator, or is covered or coated with such a material.

Corona treatment, as a method for surface pretreatment, can be conducted as understood by those with ordinary skill in the field of the disclosure (in this regard, see, e.g., Wagner et al., Vacuum, 71 (2003), 417-436). The substrate is placed in or guided through the discharge space between an electrode and a counterelectrode, this being defined as direct physical treatment. By means of a suitably high web tension, the substrate is pressed onto the counterelectrode, in the latter's roll configuration, in order to prevent air inclusions. The treatment distance is typically about 1 to 2 mm. A fundamental disadvantage of a two-electrode geometry of this kind, with treatment in the space between electrode and counterelectrode, is the possible reverse-face treatment. In the case of very small inclusions of air or gas on the reverse face, as for example if the web tension is too low in the case of a roll-to-roll treatment, there is usually unwanted corona treatment of the reverse face.

With regard to the inventive atmosphere of carbon dioxide for the CO₂ corona treatment, according to embodiments of the disclosure, it should be ensured that there are no - or at any rate only very small - fractions of residual oxygen present in this atmosphere. Target oxygen fractions are not more than 1000 ppm, preferably not more than 100 ppm, more preferably not more than 10 ppm. The intensity of a corona treatment is reported as the "dose" in [Wmin/m²], where the dose D = p/b*v, where P = electrical power [W], b = electrode breadth [m], and v = web speed [m/min]. The corona pretreatment takes place preferably with a dose of 1 to 150 W^{∗}min/m². Particularly preferred is a dose from 10 to 100 W^{∗}min/m², more particularly a dose from 20 to 80 W^{∗}min/m².

In an embodiment, the method according to the disclosure comprises laminating the hot-melt adhesive layer and the pressure-sensitive adhesive layer onto each other. In some implementations of this embodiment, both layers can be produced separately and are finished when brought into contact with each other. The pressure-sensitive adhesive layer may be provided on a temporary or permanent liner, as set out in this disclosure. Preferably, both layers are provided and laminated at room temperature.

In a further embodiment, the method according to the disclosure is conducted such that the surface of the pressure-sensitive adhesive is melted during or prior to the contacting step. In some implementations, the method according to the invention also comprises: processing the pressure-sensitive adhesive of the pressure-sensitive adhesive layer into a melt; and melt-coating the pressure-sensitive adhesive onto the treated surface of the hot-melt adhesive layer to form the pressure-sensitive adhesive layer.

In the foregoing embodiments, the freshly manufactured pressure-sensitive adhesive can be coated onto the hot-melt adhesive layer. CO₂-corona treatment of the hot-melt adhesive layer may be carried out in an "offline" modus, i.e., within a certain time which amounts to a maximum of one day before the melt-coating step; or the CO₂-corona treatment may be carried out in an "inline" modus, i.e., the corona treatment is carried out directly before the melt-coating step which means the corona treatment is integrated into the process line.

Heat-sealable adhesive tapes according to the disclosure or heat-sealable adhesive tapes which have been made or otherwise manufactured according to the method of the disclosure are preferably used to bond polyolefinic parts, especially EPDM profiles, to automotive car bodies and windscreens. The improved shear resistance of the inventive tapes is especially important for assembly processes where the profile is mounted with the tape to one surface (e.g., windscreen) and a second surface (e.g., water box) is slided along the profile into the final position causing shear forces. So far, break of the tapes or position offset of the profile due to this shear stress has often been observed. Further use of the tapes may take place within building or appliance applications.

### EXAMPLE

The following example represents certain non-limiting embodiments of the glass-ceramic materials and articles of the disclosure, including the methods of making them.

According to an example, for a pressure-sensitive adhesive layer, commercially available, single-layer adhesive tapes tesa^{®} ACX^{plus} 7808 (thickness 800 µm) and tesa^{®} ACX^{plus} 7811 (thickness 1100 µm) were used. Both adhesive tapes are based on a polyacrylate/synthetic rubber blend and foamed with microballoons. Further, for the hot-melt adhesive layer, a commercially available, polypropylene-based heterophasic copolymer BA110CF (Borealis) film was used. In a laminating machine, one side of the hot-melt adhesive layer was inline-treated by CO₂-corona. 1 m downstream, the pressure-sensitive adhesive layer was provided via a laminating cylinder and pressed (9,400 N/m of product width) onto the treated side of the hot-melt adhesive layer. The pressure-sensitive adhesive layer was covered by a release liner. The heat-sealable adhesive tape was cut to a width of 8.5 mm. In addition, these samples were designated "Ex. 1" and "Ex. 3" below in Table 1.

The products (i.e., Exs. 1 and 3) were tested in a T-peel, dynamic shear and Ljig test. Furthermore, commercially available products 3M ST1200 and 3M 5608, both featuring a heat-activatable adhesive laminated to an acrylic foam core, have been tested (designated, Comp. Ex. 2 and Comp. Ex. 4, respectively, below in Table 1).

### T-peel test method

First, the hot-melt layer of each of the foregoing samples (i.e., Ex. 1, Comp. Ex. 2, Ex. 3 and Comp. Ex. 4) and a commercially available EPDM-profile (Santoprene^{®} 121-87, Exxon Mobile, 12 mm x 3 mm) were melted under the influence of IR radiation and pressed together between two cylinder rolls. The laminate was allowed to cool down to room temperature within a few minutes. Then, the release liner was removed from the pressure-sensitive adhesive layer which subsequently was attached to a foil (127 µm) of anodized aluminum (2 kg-roll was rolled 10 times over the sample). The laminate thus obtained was then stored for 72 hours at 23 °C and 50 % relative humidity. The laminate was clamped by means of hooks into a tensile testing machine. The test specimen was pulled apart perpendicularly to the bond face at 300 mm/min. Determinations were made of the maximum force, as determined from the average of five measurements, in N/cm (see Table 1 below), and also of the fracture mode.

### Dynamic shear test method

As before, the hot-melt layer of each of the foregoing samples (i.e., Ex. 1, Comp. Ex. 2, Ex. 3 and Comp. Ex. 4) and a commercially available EPDM-profile (Santoprene^{®} 121-87, Exxon Mobile, 12 mm x 3 mm) were melted under the influence of IR radiation and pressed together between two cylinder rolls. The laminate was allowed to cool down to room temperature within a few minutes. Then, the release liner was removed from the pressure-sensitive adhesive layer which subsequently was attached to a piece of coated float glass (Ferro 14501 IR7161, primed with Dow betaprime 5500). The laminate thus obtained was then stored for 24 hours at 23 °C and 50 % relative humidity. The assembly was parted in a Zwick tensile testing machine at 50 mm/min and at 23°C and 50% relative humidity in such a way that it was pulled apart at an angle of 180°. The maximum force, as the average from three measurements, was ascertained in N/cm² (see Table 1 below). According to those results, the work load of the tapes until break was calculated as the product of maximum force and elongation of the tape.

### Ljig test method

Again, the hot-melt layer of each of the foregoing samples (i.e., Ex. 1, Comp. Ex. 2, Ex. 3 and Comp. Ex. 4) and a commercially available EPDM-profile (Santoprene^{®} 121-87, Exxon Mobile, 12 mm x 3 mm) were melted under the influence of IR radiation and pressed together between two cylinder rolls. The laminate was allowed to cool down to room temperature within a few minutes. An L-shaped steel sheet angle was stored in acetone for 30 minutes and then wiped down a number of times on the side where bonding was to take place, using an acetone-soaked cloth. The steel sheet angle was stored in the air for 10 minutes for evaporation of the acetone and subsequently primed with Dow betaprime 5500. Then the pressure-sensitive adhesive layer of the heat-sealable adhesive tape was bonded on the bottom side of the smaller leg of the L-shaped steel sheet angle. The bonded substrates were pressed against one another for 5 seconds at 60 N using a press with a steel ram. The test specimen was subsequently stored under standard conditions for 24 h.

An additional plate with hook was clamped into the upper clamping jaw of a tensile testing machine. The test specimen assembly with the steel sheet angle bonded to it was introduced into a rail. The longer leg of the L-shaped steel sheet angle was joined to the hook, without tension. The steel sheet angle was then peeled from the test specimen assembly at a rate of 50 mm/min and at an angle of 90° to the bond face. The maximum force measured during this procedure was ascertained, as the average from three measurements, and reported in units of N/cm (see Table 1 below), as was the fracture mode.

The results from the foregoing testing are provided in Table 1 below.

**TABLE 1: Sealing Tape Test Results**

| **Sample** | **T-peel (N/cm)** | **Dynamic shear (N/cm²)** | **Work load (N*mm)** | **Ljig (N/cm)** |
|---|---|---|---|---|
| Ex. 1 | 38.0 (f.s.) | 75.5 | 5,704.8 | 57.2 (PSA/Primer) |
| Comp. Ex. 2 | 24.6 (f.s.) | 87.9 | 2,106.8 | 41.4 (f.s.) |
| Ex. 3 | 55.3 (f.s.) | 71.3 | 9,072.4 | 69.1 (PSA/Primer) |
| Comp. Ex. 4 | 30.9 (f.s.) | 66.0 | 913.7 | 29.2 (f.s.) |

As noted earlier, in Table 1 above, Ex. 1 is a heat-sealable adhesive tape according to the disclosure, as comprising a pressure-sensitive adhesive layer = tesa^{®} ACX^{plus} 7808 and prepared according to the protocol listed above. Further, Comp. Ex. 2 is a heat-sealable adhesive tape comprising 3M 5608, serving as a comparative example relative to Ex. 1 as it has a similar thickness. Ex. 3 is a heat-sealable adhesive tape according to the disclosure, as comprising a pressure-sensitive adhesive layer = tesa^{®} ACX^{plus} 7811 and prepared according to the protocol above. Finally, Comp. Ex. 4 is a heat-sealable adhesive tape comprising 3M ST 1200, serving as a comparative example relative to Ex. 3 given its similar thickness to this example. With further regard to Table 1, "f.s." refers to foam split; and "PSA//Primer" refers to the break between pressure-sensitive adhesive layer and primered side of the smaller leg of the L-shaped steel sheet angle.

As is evident from Table 1 above, the inventive samples, Ex. 1 and Ex. 3, demonstrate superior performance over the comparative examples, Comp. Ex. 2 and Comp. Ex. 4, with regard to each of the reported T-peel, Dynamic shear and Work load and Ljig attributes.

## Claims

1. A heat-sealable adhesive tape, comprising:
a hot-melt adhesive layer; and
a pressure-sensitive adhesive layer adjacent to the hot-melt adhesive layer, the pressure-sensitive adhesive layer comprising a blend of:
b1) at least one poly(meth)acrylate, and
b2) at least one selected from an elastomeric material and a thermoplastic-elastomeric material,
wherein a surface of the hot-melt adhesive adjacent to the pressure-sensitive layer is **characterized by** a CO₂-corona pre-treatment.

2. The adhesive tape according to claim 1, wherein the hot-melt adhesive layer is a polyolefin layer.

3. The adhesive tape according to claim 1, wherein the pressure-sensitive adhesive layer is foamed.

4. The adhesive tape according to claim 1, wherein the pressure-sensitive adhesive layer comprises at least one tackifier compatible with the at least one poly(meth)acrylate.

5. A method of making a heat-sealable adhesive tape, comprising
providing a hot-melt adhesive layer;
treating a surface of the hot-melt adhesive layer with a CO₂-corona to define a treated surface; and
contacting the treated surface of the hot-melt adhesive layer with a surface of a pressure-sensitive adhesive layer to form the tape,
wherein the pressure-sensitive adhesive layer comprises a blend of:
b1) at least one poly(meth)acrylate, and
b2) at least one selected from an elastomeric material and a thermoplastic-elastomeric material.

6. The method according to claim 5, further comprising:
laminating the pressure-sensitive layer and the hot-melt adhesive layer onto each other.

7. The method according to claim 5, wherein the surface of the pressure-sensitive adhesive layer is melted during or prior to the contacting step.

## Patentansprüche

1. Heißsiegelfähiges Klebeband, umfassend:
eine Schmelzkleberschicht; und
eine Haftkleberschicht benachbart zu der Schmelzkleberschicht, wobei die Haftkleberschicht ein Gemisch umfasst von:
b1) wenigstens einem Poly(meth)acrylat und
b2) wenigstens einem ausgewählt aus einem elastomeren Material und einem thermoplastisch-elastomeren Material,
wobei eine Oberfläche des Schmelzklebers benachbart zu der Haftkleberschicht durch eine CO₂-Korona-Vorbehandlung gekennzeichnet ist.

2. Klebeband gemäß Anspruch 1, wobei die Schmelzkleberschicht eine Polyolefinschicht ist.

3. Klebeband gemäß Anspruch 1, wobei die Haftkleberschicht geschäumt ist.

4. Klebeband gemäß Anspruch 1, wobei die Haftkleberschicht wenigstens einen Klebrigmacher, der mit dem wenigstens einen Poly(meth)acrylat vereinbar ist, umfasst.

5. Verfahren zur Herstellung eines heißsiegelfähigen Klebebands, umfassend Bereitstellen einer Schmelzkleberschicht;
Behandeln einer Oberfläche der Schmelzkleberschicht mit einer CO₂-Korona, um eine behandelte Oberfläche zu definieren; und
Inkontaktbringen der behandelten Oberfläche der Schmelzkleberschicht mit einer Oberfläche einer Haftkleberschicht, um das Band zu bilden,
wobei die Haftkleberschicht ein Gemisch umfasst von:
b1) wenigstens einem Poly(meth)acrylat und
b2) wenigstens einem ausgewählt aus einem elastomeren Material und einem thermoplastisch-elastomeren Material.

6. Verfahren gemäß Anspruch 5, ferner umfassend:
Laminieren der Haftkleberschicht und der Schmelzkleberschicht aneinander.

7. Verfahren gemäß Anspruch 5, wobei die Oberfläche der Haftkleberschicht während des oder vor dem Schritt(s) des Inkontaktbringens geschmolzen wird.

## Revendications

1. Ruban adhésif thermoscellable, comprenant :
une couche d'adhésif thermofusible ; et
une couche d'adhésif sensible à la pression adjacente à la couche d'adhésif thermofusible, la couche d'adhésif sensible à la pression comprenant un mélange de :
b1) au moins un poly(méth)acrylate, et
b2) au moins l'un choisi parmi un matériau élastomérique et un matériau élastomérique-thermoplastique,
une surface de l'adhésif thermofusible adjacente à la couche sensible à la pression étant **caractérisée par** un prétraitement parcorona-CO₂.

2. Ruban adhésif selon la revendication 1, la couche d'adhésif thermofusible étant une couche de polyoléfine.

3. Ruban adhésif selon la revendication 1, la couche d'adhésif sensible à la pression étant moussée.

4. Ruban adhésif selon la revendication 1, la couche d'adhésif sensible à la pression comprenant au moins un agent tackifiant compatible avec l'au moins un poly(méth)acrylate.

5. Procédé de préparation d'un ruban adhésif thermoscellable, comprenant la mise à disposition d'une couche d'adhésif thermofusible ;
le traitement d'une surface de la couche d'adhésif thermofusible avec un corona-CO₂ pour définir une surface traitée ; et
la mise en contact de la surface traitée de la couche d'adhésif thermofusible avec une surface d'une couche d'adhésif sensible à la pression pour former le ruban,
la couche d'adhésif sensible à la pression comprenant un mélange de :
b1) au moins un poly(méth)acrylate, et
b2) au moins l'un choisi parmi un matériau élastomérique et un matériau élastomérique-thermoplastique.

6. Procédé selon la revendication 5, comprenant en outre :
la stratification de la couche sensible à la pression et de la couche d'adhésif thermofusible l'une sur l'autre.

7. Procédé selon la revendication 5, la surface de la couche d'adhésif sensible à la pression étant fondue pendant ou avant l'étape de mise en contact.
